# EUROPÄISCHE PATENTSCHRIFT

(11) **EP 2 671 127 B1**
(45) Veröffentlichungstag und Bekanntmachung des Hinweises auf die Patenterteilung: **25.04.2018**
(21) Anmeldenummer: 12700922.3
(22) Anmeldetag: 07.01.2012
(51) Int. Cl.: F15B 13/043, G05D 16/20

(54) **PROPORTIONAL-DRUCKREGELVENTIL**
PROPORTIONAL PRESSURE-REGULATING VALVE
VANNE DE RÉGULATION DE PRESSION À EFFET PROPORTIONNEL

(30) Priorität: 05.02.2011 DE 102011010474
(43) Veröffentlichungstag der Anmeldung: 11.12.2013
(73) Patentinhaber: Hydac Fluidtechnik GmbH, 66280 Sulzbach/Saar (DE)
(72) Erfinder: SCHULZ, Frank, 66440 Blieskastel-Bierbach (DE); BRUCK, Peter, 66484 Althornbach (DE)
(74) Vertreter: Bartels und Partner, Patentanwälte
(86) Internationale Anmeldenummer: PCT/EP2012/000050
(87) Internationale Veröffentlichungsnummer: WO 2012/104005

(56) Entgegenhaltungen:
- WO-A1-2004/109419
- WO-A1-2005/083542
- DE-A1-102006 039 488

## Beschreibung

Die Erfindung betrifft ein Proportional-Druckregelventil mit einem Ventilgehäuse, das mindestens drei fluidführende Anschlüsse aufweist, insbesondere in Form eines Pumpen-, eines Nutz- und eines Tankanschlusses, wobei innerhalb des Ventilgehäuses zum wahlweisen Verbinden des Pumpenanschlusses mit dem Nutzanschluss sowie des Nutzanschlusses mit dem Tankanschluss ein Regelkolben längsverfahrbar geführt ist, der über Magnetkraft mittels einer mit Stromsignalen beaufschlagbaren Magnetspuleneinrichtung ansteuerbar ist, wobei der Regelkolben derart mit einer Flächenübersetzung versehen ist, dass ein am Nutzanschluss sich aufbauender Druck eine Gegenkraft zur Magnetkraft der Magnetspuleneinrichtung erzeugt, welche den Regelkolben derart zurückbewegt, dass ein Zufluss von Druckmittel von dem Pumpenanschluss zum Nutzanschluss sich so lange verringert, bis der am Nutzanschluss anstehende Druck der Magnetkraft und insoweit der Druckwert-Vorgabe über das an der Magnetspuleneinrichtung anstehende jeweilige Stromsignal entspricht.

Die US 6 286 535 B1 offenbart ein dahingehend gattungsgemäßes Proportional-Druckregelventil mit einem axial in Bezug auf eine Verschieberichtung eines Regelkolbens innerhalb eines Ventilgehäuses angeordneten Pumpenanschluss. Weitere fluidführende Anschlüsse wie ein Nutzanschluss und ein Tankanschluss münden quer zu der axialen Verschieberichtung des Regelkolbens in das Ventilgehäuse ein und dort in einen Ringraum, der auf seiner einen Seite von dem Ventilgehäuse und auf der anderen Seite von dem Regelkolben begrenzt ist. In axialer Richtung ist zwischen einem Ende des Regelkolbens und dem Ventilgehäuse eine Dämpfungskammer angeordnet, die über eine Blende stets mit diesem Ringraum fluidführend verbunden ist und zwar dergestalt, dass Verfahrbewegungen des Regelkolbens in dem Ventilgehäuse durch die durch die Blende gebildete Ausgleichseinrichtung gedämpft sind. Das gezeigte Proportional-Druckregelventil ist damit in der Lage, beispielsweise bei einer hydraulisch angesteuerten Kupplung oder einem ähnlichen Verbraucher plötzliche Volumenstromänderungen in ihrer Wirkung auf die hydraulische Vorsteuerung des Proportional-Druckregelventils deutlich zu dämpfen.

Die DE 44 42 085 C2 offenbart ein elektromagnetisch betätigtes Proportional-Druckregelventil mit
- einem Ventilkörper, der zumindest eine Fluideinlassöffnung und eine Fluidauslassöffnung sowie einen Kanal aufweist, der die Fluideinlassöffnung mit der Fluidauslassöffnung verbindet;
- einem Ventilkolben, der in dem Ventilkörper untergebracht ist und betätigbar zum Öffnen und Schließen des Kanals zwischen der Fluideinlassöffnung und der Fluidauslassöffnung angeordnet ist, wobei der Ventilkolben eine Bohrung mit verringertem Durchmesser aufweist;
- einem Kolben, der in dem Ventilkörper eingeschlossen und angeordnet ist, um eine Druckkammer auszubilden, wobei der Kolben ein Vorsteuerventil aufweist, das außerhalb der Druckkammer angeordnet ist, wobei das Vorsteuerventil betätigbar angeordnet ist, um den Druck in der Druckkammer zu regeln;
- einem Rückführkanal, der durch den Kolben zwischen der Druckkammer und der Fluidauslassöffnung gebildet ist; und
- einer elektrischen Einrichtung mit einer elektromagnetischen Spule und einem Kern aus magnetischem Material, die eine elektromagnetische Kraft erzeugt, um das Vorsteuerventil des Kolbens zu bewegen.

Die US 5 836 335 offenbart ein Proportional-Druckregelventil, bei dem ein Regelkolben eine Einrichtung zum Begrenzen von Druckspitzen aufweist, wie sie beispielsweise an einem Verbraucheranschluss eines Verbrauchers zur Betätigung einer hydraulisch betätigten Kupplung auftreten können. Hierzu wird bei einer bevorzugten Ausführungsform des bekannten Ventils in dem Regelkolben ein federbelastetes Rückschlagventil eingesetzt, das über einen Ringraum an den Verbraucheranschluss anschließbar ist. Für das Proportional-Druckregelventil ist ein Druckschwellenwert dahingehend vorgebbar, dass bei Überschreiten des betreffenden Druckschwellenwertes eine fluidführende Verbindung zwischen dem Ringraum und einer Umfangsnut in dem Regelkolben freigegeben wird. Der Ringraum ist ständig an einen Tankanschluss angeschlossen.

Insbesondere für hydraulische Aktuatoren zur Betätigung von Kupplungen in Antriebssträngen ist es wünschenswert, deren Arbeitsräume rasch mit Druckmittel zu befüllen oder zu entleeren, wobei insbesondere eine waagerechte p-Q-Kennlinie der zur Steuerung des Druckmittelstroms für die hydraulischen Aktuatoren eingesetzte Proportional-Druckregelventile vorteilhaft ist. Die bekannten Proportional-Druckregelventile sind in Bezug auf ihr Regelverhalten von dem Volumenstrom beeinflusst.

Die WO 2004/109419 A1 und die WO 2005/083542 A1 offenbaren jeweils Proportional-Druckregelventile mit einem Ventilgehäuse, das mindestens drei fluidführende Anschlüsse aufweist, insbesondere in Form eines Pumpen-, eines Nutz- und eines Tank-Anschlusses, wobei innerhalb des Ventilgehäuses zum wahlweisen Verbinden des Pumpenanschlusses mit dem Nutzanschluss sowie des Nutzanschlusses mit dem Tankanschluss ein Regelkolben längsverfahrbar geführt ist, der über Magnetkraft mittels einer mit Stromsignalen beaufschlagbaren Magnetspuleneinrichtung ansteuerbar ist. Die Regelkolben dieser Dokumente sind im Bereich des Nutzanschlusses hinsichtlich des Durchmessers konstant ausgebildet und insofern sowohl in Richtung des Pumpenanschlusses als auch in Richtung des Tankanschlusses druckausgeglichen.

Aus der DE 10 2006 039 488 A1 geht lediglich ein Druckregelventil mit einem Pumpen- und einem Tankanschluss hervor. Das Ventil wird in Abhängigkeit von dem am Pumpenanschluss anstehenden Druck gesteuert.

Ausgehend von diesem Stand der Technik liegt daher der Erfindung die Aufgabe zugrunde, ein Proportional-Druckregelventil zu schaffen, dessen Regelverhalten von einem Volumenstrom weitgehend unbeeinflusst ist und insbesondere dessen Regelverhalten in Richtung einer waagerechten p-Q-Kennlinie führt.

Eine dahingehende Aufgabe löst ein Proportionaldruckregelventil mit den Merkmalen des Patentanspruchs 1 in seiner Gesamtheit.

Die die Flächenübersetzung bildende Wirk- oder Druckfläche ist durch einen Durchmesserunterschied am Außenumfang des Regelkolbens gebildet. Die Flächenübersetzung ist in der Art einer Stufe an dem Regelkolben gebildet, wobei in jeder Verfahrstellung des Regelkolbens sich die Stufe in axialer Richtung des Ventilgehäuses zwischen dem Nutzanschluss und dem Tankanschluss befindet.

Das Proportional-Druckregelventil sieht vor, dass der Regelkolben derart mit einer Flächenübersetzung versehen ist, dass ein am Nutzanschluss sich aufbauender Druck eine Gegenkraft zur Magnetkraft der Magnetspuleneinrichtung erzeugt, welche den Regelkolben derart zurückbewegt, dass ein Zufluss von Druckmittel von dem Pumpenanschluss zum Nutzanschluss sich so lange verringert, bis der am Nutzanschluss anstehende Druck der Magnetkraft und insoweit der Druckwert-Vorgabe über das an der Magnetspuleneinrichtung anstehende jeweilige Stromsignal entspricht.

Die Flächenübersetzung wird von Wirk- oder Druckflächen an dem Regelkolben gebildet und die Wirk- oder Druckflächen werden mit einem sich an dem Nutzanschluss des Proportional-Druckregelventils aufbauenden Druck beaufschlagt. Eine Wirkung von Staudruck des durch das Proportional-Druckregelventil strömenden Druckmittels auf die dahingehenden Wirk- oder Druckflächen ist zumindest weitestgehend ausgeschlossen. Durch diese konstruktive Maßnahme ergibt sich eine zumindest annähernd waagerechte p-Q-Kennlinie des Druckmittelvolumenstroms, was gewünscht ist.

Der Regelkolben weist in seinem Inneren einen Längskanal auf, wobei in dem Regelkolben Durchgangsöffnungen angeordnet sind, die geeignet sind, zumindest teilweise eine fluidführende Verbindung zwischen dem Längskanal und dem Nutzanschluss sowie dem Tankanschluss herzustellen. Die dem Nutzanschluss zugeordneten Durchgangsöffnungen in dem Regelkolben sind durch Wandteile des Regelkolbens gebildet, die wiederum mit Wandteilen des Ventilgehäuses den Nutzanschluss zumindest teilweise begrenzen und eine Regelkante für die Fluidzu- und -abfuhr an dem Nutzanschluss ausbilden. Im Axialbereich zwischen dem Nutzanschluss und dem Pumpenanschluss ist der Regelkolben mit einem außenumfangsseitigen Ringkanal versehen, dessen begrenzende Wandteile, insbesondere dessen in axialer Richtung gesehen begrenzende Wandteile zumindest teilweise mit zuordenbaren Wandteilen des Ventilgehäuses, die den Pumpenanschluss begrenzen, eine weitere Regelkante ausbilden. Durch die genannten konstruktiven Maßnahmen ist es ermöglicht, den Druckmittelzufluss von dem Pumpenanschluss zu dem Nutzanschluss, sowie den Druckmittelfluss von dem Nutzanschluss zu dem Tankanschluss zu trennen. Ferner ist durch diese konstruktive Maßnahme bewirkt, dass ein Abgriff von statischem Druck an dem Nutzanschluss zur Beaufschlagung der die Flächenübersetzung bildenden Wirk- oder Druckflächen ermöglicht ist.

Die, die Flächenübersetzung bildende Stufe an dem Regelkolben wird somit überwiegend von "statischem" Druck eines Druckmittels an dem Nutzanschluss des Proportional-Druckregelventils beaufschlagt. Dadurch ist die Längsbewegung des Regelkolbens in dem Ventilgehäuse vergleichmäßigt und gedämpft.

In einem besonders bevorzugten Ausführungsbeispiel des Proportional-Druckregelventils ist die Stufe an dem Regelkolben zumindest teilkreisförmig, vorzugsweise kreisförmig gebildet. Bei einer kreisförmigen Ausbildung der dahingehenden Stufe ist eine Druckbeaufschlagung der Stufe um deren gesamten Umfang und nicht nur im tangentialen Erstreckungsbereich des Nutzanschlusses ermöglicht.

Der Stufe an dem Regelkolben in der Art eines Freistiches kann eine Art Dämpfungsdrossel vorgeschaltet sein, die zwischen den Wandteilen des Regelkolbens und den Wandteilen des Ventilgehäuses angeordnet ist. Die Dämpfungsdrossel ist in der Art einer Umfangsnut an dem Regelkolben ausgebildet. Die, die Dämpfungsdrossel bildende Umfangsnut weist eine asymmetrische Querschnittsform dahingehend auf, dass ihre, in axialer Richtung von dem Nutzanschluss zu dem Tankanschluss betrachtet, radial gerichtete Einstichtiefe sich allmählich vergrößert und dann, eine steile Nutflanke bildend und insoweit die Stufe am Regelkolben ausbildend, sich verkleinert. Durch die Dämpfungsdrossel ergibt sich somit ein Fluidringraum, der der Stufe in Bezug auf die Druckmittel-Zutrittsrichtung axial vorgelagert ist. Die dahingehende Dämpfungsdrossel stellt eine weitere besonders vorteilhafte, konstruktive Maßnahme dar, mit Hilfe des erfindungsgemäßen Proportional-Druckregelventils eine waagerechte p-Q-Kennlinie zu erzeugen.

Dadurch, dass ein Druckmittelstrom von dem Pumpenanschluss zu dem Nutzanschluss an der Außenseite des Regelkolbens in dem erwähnten Ringkanal, zwischen Wandteilen des Ventilgehäuses und Wandteilen des Regelkolbens geführt ist, ist ein direktes Anströmen von Druckmittel an die Stufe selbst verhindert.

Der Regelkolben ist, in axialer Richtung betrachtet, zum einen von einem Stellglied der Magnetspuleneinrichtung beaufschlagt und stützt sich auf seiner, der Magnetspuleneinrichtung abgewandten Seite an einem Energiespeicher, vorzugsweise in Form einer Druckfeder, ab. Der Energiespeicher stützt sich wiederum in einem besonders bevorzugten Ausführungsbeispiel des Proportional-Druckregelventils mit seinem einen freien Ende an einem Abschlussteil des Ventilgehäuses ab. Es ist vorteilhaft, den Energiespeicher in einem Aufnahmeraum des Ventilgehäuses anzuordnen, der über einen Medienkanal fluidführend mit dem Längskanal des Regelkolbens verbunden ist. Auf diese Weise ist eine einfache Bauform des Energiespeichers gewählt und zudem eine einfache Möglichkeit geschaffen, das erfindungsgemäße Proportional-Druckregelventil in seinem konstruktiven Aufbau an ein vorgegebenes Druckniveau und vorgegebene Stellkräfte in Abhängigkeit von dem Verwendungszweck des Proportional-Druckregelventils in einer hydraulischen Anlage anzupassen. Der Medienkanal stellt eine einfache Möglichkeit dar, den Aufnahmeraum von dem Energiespeicher druckentlastet auszubilden.

Vorteilhaft ist das Regelkolben-Ventilgehäuse außenumfangsseitig mit Dichteinrichtungen versehen, so dass die fluidführenden Anschlüsse des Proportional-Druckregelventils zwischen der Außenwand des Ventilgehäuses und der Innenwand eines Ventilblockes abgedichtet sind, in den das Ventilgehäuse eingesetzt ist. Durch den Einsatz von separaten Dichteinrichtungen ist es ermöglicht, etwaige Fertigungstoleranzen, insbesondere in Bezug auf die radiale Passgenauigkeit des Ventilgehäuses in dem Ventilblock, zu erhöhen, was wiederum die Kosten bei der Fertigung des dahingehenden Proportional-Druckregelventils als Ganzes senken hilft. Der Nutzanschluss sowie der Tankanschluss des Proportional-Druckregelventils werden aus mindestens jeweils zwei voneinander verschiedenen Anschlussstellen gebildet, die jeweils durch Wandteile des Ventilgehäuses voneinander separiert sind.

Das gesamte Proportional-Druckregelventil ist in einem besonders bevorzugten Ausführungsbeispiel in der Art einer Einschraubpatrone ausgebildet, die in den Ventilblock einschraubbar ist, der Fluidführungen aufweist, die mit den fluidführenden Anschlüssen im Ventilgehäuse kommunizieren bzw. fluidführend verbunden sind. Auf diese Weise eignet sich das Proportional-Druckregelventil, um in bauraumsparender Weise an verschiedenen Funktionsabschnitten einer hydraulischen Anlage angeordnet zu werden. Mit dem erfindungsgemäßen Proportional-Druckregelventil ist eine zumindest annähernd lineare p-Q-Kennlinie dahingehend generierbar, dass der Regeldruck unabhängig von dem Druckmittelvolumenstrom zwischen den fluidführenden Anschlüssen des Proportional-Druckregelventils gehalten ist. Das erfindungsgemäße Proportional-Druckregelventil vermeidet somit alle Nachteile der aus dem Stand der Technik bekannten Proportional-Druckregelventile in Bezug auf einen nicht linearen Verlauf der mit solchen Proportional-Druckregelventilen erzeugbaren p-Q-Kennlinien.

Das erfindungsgemäße Proportional-Druckregelventil eignet sich in besonderer Weise zur Steuerung des Druckmittelstroms für einen Arbeitsraum eines hydraulischen Verbrauchers, der zum Ansteuern einer Kupplungseinrichtung für einen Antrieb einer Maschine oder für einen Fahrantrieb eines Fahrzeugs vorgesehen ist.

Nachfolgend wird das erfindungsgemäße Proportional-Druckregelventil anhand eines Ausführungsbeispiels nach der Zeichnung näher erläutert. Dabei zeigen die
- Fig. 1: in der Art eines Längsschnittes das erfindungsgemäße Proportional-Druckregelventil als Einschraubpatronenlösung ausgeführt; und
- Fig. 2: in vergrößerter Darstellung einen Ausschnitt I in Fig. 1.

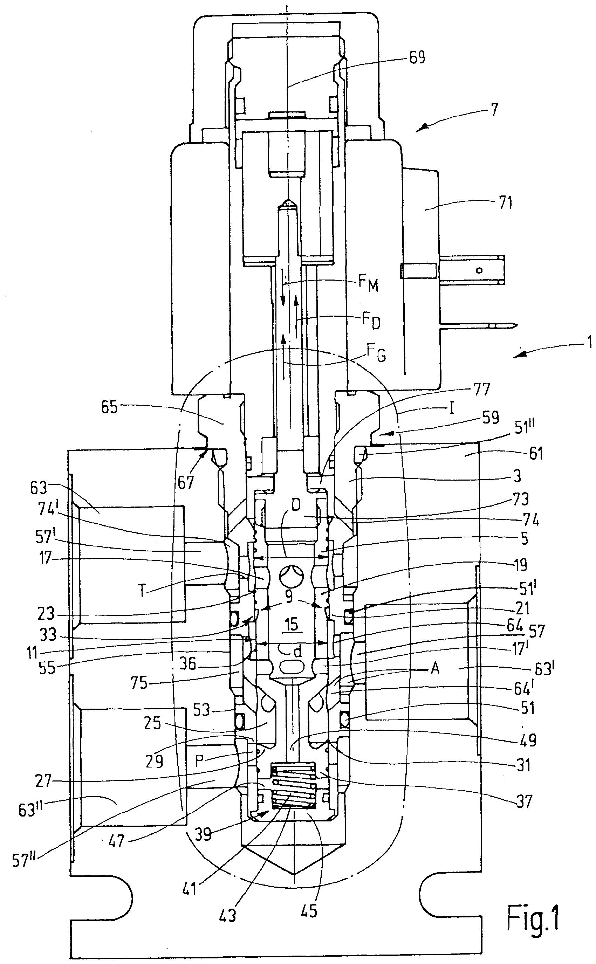

In der Fig. 1 ist das erfindungsgemäße Proportional-Druckregelventil 1 durch eine Art Längsschnittdarstellung mit seinen wesentlichen Teilen dargestellt. Es weist ein Ventilgehäuse 3 auf, das sich dergestalt über eine Einschraubstrecke in einen Ventilblock 61 oder dergleichen einschrauben lässt. Das dünnwandige, in der Art eines Hohlzylinders mit verschiedenen Durchmessersprüngen versehene Ventilgehäuse 3 weist in radialer Umfangsrichtung, und zwar in Blickrichtung auf die Figur 1 gesehen, von oben nach unten, verschiedene fluidführende Anschlüsse auf. Diese sind ein Tankanschluss T, ein Nutzanschluss A zur Druckmittelversorgung eines nicht näher dargestellten Verbrauchers und ein Pumpenanschluss P für den Anschluss einer nicht näher dargestellten Fluidversorgung, beispielsweise in Form einer Hydropumpe, etwa einer Konstantpumpe zur Förderung von Hydrauliköl. Des Weiteren ist innerhalb des Ventilgehäuses 3 zum wahlweisen Verbinden des Pumpenanschlusses P mit dem Nutzanschluss A, sowie des Nutzanschlusses A mit dem Tankanschluss T ein Regelkolben 5 längsverfahrbar geführt.

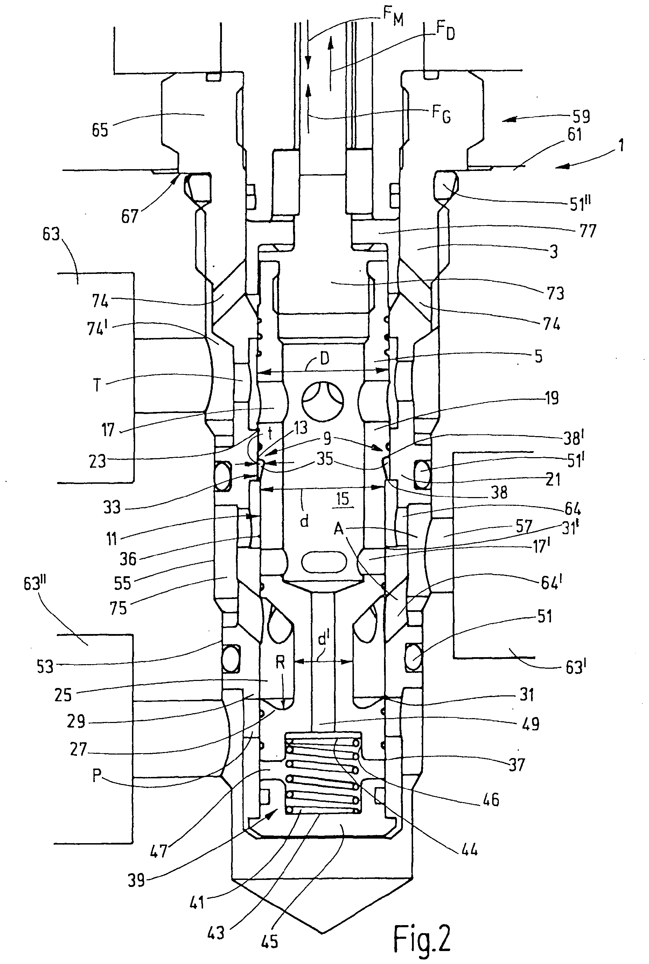

Zur Herstellung einer fluidführenden Verbindung zwischen den betreffenden fluidführenden Anschlüssen P, A und T ist der Regelkolben 5 mit der Magnetkraft F_{M} einer Magnetspuleneinrichtung 7 ansteuerbar. Die Magnetspuleneinrichtung 7 übt in Abhängigkeit von ihrer jeweiligen Bestromung dabei eine Magnetkraft F_{M} in axialer Richtung auf den Regelkolben 5 aus. Der Regelkolben 5 weist an seinem Außenumfang 11 eine Flächenübersetzung 9 in Form einer durch einen Durchmessersprung gebildeten Stufe 13 (s. Fig. 2) auf. Zur Bildung der Stufe 13 ist am Außenumfang des Regelkolbens 5 ein Durchmesser d des Regelkolbens 5, den dieser im Bereich seines Nutzanschlusses A aufweist, zu einem Durchmesser D, den der Regelkolben 5 im Bereich des Tankanschlusses T aufweist, vergrößert. Das Detail I in Fig.2 verdeutlicht dies in vergrößerter Darstellung. Der Durchmessersprung d zu D in dem gezeigten Ausführungsbeispiel ist relativ klein und beträgt beispielsweise 1/20 bis 1/50 des gewählten Durchmessers d. Die Stufe 13 befindet sich in Axialrichtung des Regelkolbens 5 betrachtet, in jeder Verfahrstellung des Regelkolbens 5 innerhalb des stationären Ventilgehäuses 3 zwischen dem Nutzanschluss A und dem Tankanschluss T.

Der Regelkolben 5 weist ferner einen über seine axiale Erstreckung zwischen dem Tankanschluss T und dem Pumpenanschluss P reichenden, mittig angeordneten Längskanal 15 auf. Der Regelkolben 5 weist ferner radiale Durchgangsöffnungen 17 auf, die in der Lage sind, eine fluidführende Verbindung zwischen dem Längskanal 15 und dem Tankanschluss T herzustellen. In dem gezeigten Ausführungsbeispiel sind fünf Durchgangsöffnungen 17 in Form von zylindrischen Durchgangsbohrungen mit tangentialem Versatz zueinander in dem insgesamt hohlzylindrisch gebildeten Regelkolben 5 angeordnet. In Betrachtungsrichtung der Fig.1 und 2 sind unterhalb von diesen weitere vier Durchgangsöffnungen 17' in Form von quer verlaufenden Langlöchern mit 90° tangentialem Versatz zueinander in dem Regelkolben 5 angeordnet. Die Durchgangsöffnungen 17' bilden mögliche fluidführende Verbindungen zwischen dem Längskanal 15 und dem Nutzanschluss A aus. Die Durchgangsöffnungen 17' und insbesondere die Wandteile 19, welche auch die Durchgangsöffnungen 17 in dem Regelkolben 5 begrenzen, kommunizieren mit Wandteilen 21 des Ventilgehäuses 3 zumindest teilweise dahingehend, dass der Nutzanschluss A in seinem freien Querschnitt begrenzt wird, wobei die dahingehende Durchgangsstelle im Gehäuse zwischen dem Tankanschluss T und dem Nutzanschluss A im Gehäuse mit 23 bezeichnet ist. Die Fluidzufuhr und -abfuhr von dem Pumpenanschluss P zu dem Nutzanschluss A erfolgt außenumfangsseitig entlang des Regelkolbens 5. Zu diesem Zweck ist der Regelkolben 5 ausgehend von seinem pumpenanschlussseitigen Ende von dem Außendurchmesser d zu einem etwa halb so großen Außendurchmesser d' (siehe Fig. 2) verengt. Dadurch ist zwischen den weiteren Wandteilen 27 des Regelkolbens 5 und den zuordenbaren weiteren Wandteilen 29 des Ventilgehäuses 3 ein Ringkanal 25 gebildet und durch dessen spezifischen Längsschnittverlauf in der Art eines Parallelogramms ist zusammen mit dem Pumpenanschluss P eine Regelkante 31 gebildet, die den Pumpenfluidstrom ansteuert. Eine weitere Regelkante 31' steuert den Fluidfluss zwischen der Durchgangsöffnung 17 und dem Nutzanschluss A. Der Ringkanal 25 ist in axialer Richtung mit entsprechend großer Baulänge konzipiert, um eine Strömungskraftkompensation zu erreichen. Ausgehend von der Regelkante 31 wird insoweit in günstiger Weise eine statisch länger anliegende Strömung erreicht.

Während somit der Druckmittelstrom von dem Pumpenanschluss P zu dem Nutzanschluss A außenumfangsseitig des Regelkolbens 5 geführt ist, ist der Druckmittelstrom ausgehend von dem Nutzanschluss A zu dem Tankanschluss T im Wesentlichen im Inneren des Regelkolbens 5 über dessen Längskanal 15 geführt. Dadurch wirkt im Axialbereich zwischen dem Nutzanschluss A und dem Tankanschluss T ein "dynamischer" Druck innerhalb des Regelkolbens 5, während im Axialbereich zwischen dem Pumpenanschluss P und dem Nutzanschluss A der dynamische Druck bzw. Staudruck der Fluidströmung außerhalb des Regelkolbens 5 wirkt. Durch diese konstruktive Maßnahme ist es ermöglicht, dass auf die Flächenübersetzung 9 bzw. die diese bildende Stufe 13 annähernd ausschließlich "statischer" Druck, der aktuell an dem Nutzanschluss A anliegt, wirkt. Die die Flächenübersetzung 9 bildende Stufe 13 an dem Regelkolben 5 ist in dem gezeigten Ausführungsbeispiel ringförmig ausgebildet, wobei es auch vorteilhaft sein kann, dass die Stufe 13 lediglich einen kreissegmentförmigen oder kreisscheibenausschnittförmigen Querschnitt aufweisen kann.

Ferner zeigt insbesondere die Fig.2, dass der Stufe 13 eine Art Dämpfungsdrossel 33 in Form einer Umfangsnut 35 in dem Regelkolben 5 vorgelagert ist. Die dahingehende Umfangsnut 35 weist einen asymmetrischen Querschnitt auf, der sich durch eine, ausgehend von der dem Nutzanschluss A zugewandten Flanke 38 der Umfangsnut 35 zunehmenden Einstichtiefe t und einer steilen, die Stufe 13 bildenden, gegenüberliegenden Flanke 38' auszeichnet. Der auf einer Außenseite 36 des Regelkolbens 5 anstehende Fluiddruck des Nutzanschlusses A ist somit in der Lage, die Stufe 13 über die Drossel 33 indirekt anzuströmen. Der "statische" Druck an dem Nutzanschluss A übt insoweit auf die Stufe 13 eine entgegen der Magnetkraft F_{M} gerichtete Gegenkraft F_{G} aus. Zu dieser Gegenkraft F_{G} ist eine Druckkraft F_{D} eines Energiespeichers 39 in Form einer Druckfeder 41 zu addieren. Der dahingehende Energiespeicher 39 in Form der Druckfeder 41 stützt sich mit seinem freien Ende 43 an einem axialen Abschlussteil 45 des Ventilgehäuses 3 ab und mit seinem anderen freien Ende 44 an einer endseitigen Ausnehmung 46 im Regelkolben 3. Das Abschlussteil 45 ist hierbei als eine in ihrem Randbereich von Wandteilen des Ventilgehäuses 3 umbördelte, topfförmige Kappe gezeigt. Der Energiespeicher 39 erstreckt sich hierbei in einem Aufnahmeraum 47 des Ventilgehäuses 3, wobei die Wandteile des Aufnahmeraums 47 zur gleitenden Führung des unteren stirnseitigen Endes 37 des Regelkolbens 5 dienen.

Wie das Abschlussteil 45 weist auch der Regelkolben 5 an seinem stirnseitigen Ende 37, das dem Abschlussteil 45 zugewandt ist, eine Topfform auf, so dass die Druckfeder 41 in den betreffenden Bauteilen 45 und 5 axial und radial geführt ist. Über den gesamten Verfahrweg des Regelkolbens 5 ergibt sich somit eine sichere Zentrierung der Druckfeder 41. Zum Zwecke des Druckausgleichs ist der Aufnahmeraum 47 über einen zylindrischen Medienkanal 49 als Teil des Längskanals 15 mit dem übrigen Längskanal 15 des Regelkolbens 5 fluidführend verbunden. Der Medienkanal 49 ist axial und zentral in dem Regelkolben 5 geführt. Auch der Medienkanal 49 kann aufgrund seiner geringen lichten Weite bzw. seines Innendurchmessers und seiner nicht unbeträchtlichen axialen Erstreckung zur Dämpfung der Verfahrbewegung des Regelkolbens 5 grundsätzlich mit beitragen.

Wie in dem Ausführungsbeispiel gezeigt, sind am Außenumfang des den Regelkolben 5 aufnehmenden Ventilgehäuses 3 durch Durchmesservorsprünge zwei mit axialem Abstand zueinander angeordnete Umfangsnuten zur Aufnahme von Dichteinrichtungen 51, 51' gebildet. Die Dichteinrichtungen 51, 51' sind in dem gezeigten Ausführungsbeispiel als O-Ringe aus elastomerem Material gebildet. Eine weitere Dichteinrichtung 51" ist, der Magnetspuleneinrichtung 7 benachbart, an einem einstückig mit dem Ventilgehäuse 3 gebildeten Sechskant 65 zum Einschrauben des Ventilgehäuses 3 in den Ventilblock 61 benachbart angeordnet. Die Dichteinrichtung 51" ist im montierten Zustand des Proportional-Druckregelventils 1 in axialer und radialer Richtung zwischen dem dahingehenden Sechskant 65 und insbesondere zwischen einer axialen Flanschfläche 67 an dem Sechskant 65 und dem Ventilblock 61 festgelegt. Insgesamt bilden die Dichteinrichtungen 51, 51', 51" konstruktive Maßnahmen aus zum Separieren der fluidführenden Anschlüsse P, T und A zwischen der Außenseite 53 des Ventilgehäuses 3 und einer Innenseite 55 des Ventilblocks 61. Der Nutzanschluss A sowie der Tankanschluss T und der Pumpenanschluss P sind durch drei voneinander separierte Anschlussstellen 57, 57', 57" (siehe Fig. 1) voneinander getrennt. Der Ventilblock 61 weist, wie gezeigt, in der Art von stufenförmigen Sackbohrungen gebildete Fluidführungen 63, 63', 63" auf, die mit den fluidführenden Anschlüssen T, A und P in dem Ventilgehäuse 3 jeweils fluidführend verbunden sind. Der axiale Querschnittsverlauf des als Einschraubpatrone 59 gebildeten Ventilgehäuses 3 ist zu diesem Zweck an die Positionen der dahingehenden Fluidführungen 63, 63', 63" angepasst.

Neben der erfindungsgemäßen Flächenübersetzung 9, die im Übrigen aufwendig gestaltete Vorsteuereinrichtungen bekannter Ventile überflüssig macht, ist ein vorteilhaftes Merkmal des erfindungsgemäßen Proportional-Druckregelventils 1 die Aufteilung der Druckmittelzufuhr und -abfuhr zu und von dem Nutzanschluss A führenden bzw. wegführenden Durchgangsöffnungen 64', 64 in dem Ventilgehäuse 3 in jeweils zwei in einer Umfangsverteilung an dem Ventilgehäuse 3 übereinander angeordnete Reihen von Durchgangsöffnungen 64', 64, wobei die in Betrachtungsrichtung der Fig. 1 und 2 unteren Durchgangsöffnungen 64' jeweils in Form einer etwa 45° nach oben gerichteten Durchgangsbohrung bezogen auf die Längsachse 69 des Ventiles und die jeweils oberen Durchgangsöffnungen 64 als radial und senkrecht zu der Längsachse 69 des Ventiles gerichtete, zylindrische Durchgangsbohrungen ausgebildet sind.

Durch die schräge Ausrichtung der unteren Durchgangsbohrungen 64' in Richtung auf die Ausströmöffnung 57 des Ventilblockes 61 bezogen auf Nutzanschluss A ist ein druckverlustarmer Zustrom von Druckmittel zu dem Nutzanschluss A ermöglicht und zudem eine weitestgehende Trennung des in der dahingehenden Durchgangsöffnung 64' herrschenden "dynamischen" Druckes von einem in der oberen Durchgangsöffnung 64 herrschenden vorwiegend "statischen" Drucks bewirkt, sofern der Nutzanschluss A mit dem Pumpenversorgungsanschluss P verbunden ist und im Anschluss P ein entsprechender Versorgungsdruck ansteht. Beide Durchgangsöffnungen 64 und 64' münden in einen verbreiterten Ringkanal 75, der sich entlang des Außenumfangs des Ventilgehäuses 3 erstreckt und über den der Nutzanschluss A eine fluidführende Verbindung zu der oberen Durchgangsöffnung 64 hat, die über den Regelkolben 5 aufgesteuert, die Fluidführung zum Tankanschluss T freigibt.

Um ein druckverlustarmes Strömen von Fluid in den Ringkanal 25 zu ermöglichen, weisen die in axialer Richtung auf den Energiespeicher 39 gerichteten, den Ringkanal begrenzenden Wandteile 27 des Regelkolbens 5 einen Einströmradius R auf, so dass bei einer Aufsteuerung der Regelkante 31 dem in dem Ringkanal 25 einströmenden Fluid-Druckmittel ein großer Umlenkradius zur Verfügung steht, damit das Druckmittel anschließend axial in den Ringkanal 25 und durch die untere Durchgangsöffnung 64' in dem Ventilgehäuse 3 in Richtung des Nutzanschlusses A aufsteigend strömen kann.

Die in der Fig.1 gezeigte Magnetspuleneinrichtung 7 ist in der Art eines Proportional-Magnetsystems aufgebaut. Dahingehende Magnetsysteme weisen regelmäßig eine zu bestromende Spulenwicklung (nicht dargestellt) auf, wobei hierfür das Magnetsystem über einen Steckeranschlussteil 71 (siehe Fig. 1) mit radial von dem Proportional-Druckregelventil 1 abragendem Stecker verfügt. Wird die Magnetspuleneinrichtung 7 bestromt, so wird über die nicht näher dargestellte Spulenwicklung ein Betätigungsstößel 73 (siehe Fig. 2) dergestalt angesteuert, dass dieser eine, in Blickrichtung auf die Fig.1 gesehen, nach unten gerichtete Bewegung durchführt und so den mit ihm verbundenen Regelkolben 5 nach unten in dem Ventilgehäuse 3 bewegt. Der dahingehende Aufbau eines Magnetsystems bzw. der Magnetspuleneinrichtung 7 und seine Wirkungsweise ist im Stand der Technik bekannt.

Für einen Druckausgleich auf einer Kolbenrückseite des Regelkolbens 5 bei dessen Bewegung ist ein diagonal mit etwa 45° zu der Längsachse 69 verlaufender Stichkanal 74 durch das Ventilgehäuse 3, von einem Ringkanal 74' zwischen dem Ventilgehäuse 3 und dem Ventilblock 61 führend, zu einem Fluidraum 77 auf der Rückseite des Regelkolbens 5 vorgesehen. Der Ringkanal 74' ist im Axialbereich der Fluidführung 63 für den Tankanschluss T in dem Ventilblock 61 angeordnet und umgibt das Ventilgehäuse 3 entlang seines gesamten Umfanges.

Nachdem nunmehr der konstruktive Aufbau des erfindungsgemäßen Proportional-Druckregelventils 1 von seinen wesentlichen Grundzügen her beschrieben ist, wird im Folgenden zum besseren Verständnis eine Funktionsbeschreibung anhand des Ablaufes eines exemplarisch dargestellten Regelvorgangs mit dem Proportional-Druckregelventil 1 gegeben.

Bleibt die Magnetspuleneinrichtung 7 unbestromt, kann von dem Pumpenanschluss P aufgrund der in den Fig.1 und 2 dargestellten und von dem Energiespeicher 39 in Blickrichtung nach oben zentrierten und gefahrenen Position des Regelkolbens 5 kein Druckmittel in das Ventilgehäuse 3 strömen. Die Druckfeder 41 ist in ihrer maximal möglich gelängten Position. Bei einer Strombeaufschlagung der Magnetspuleneinrichtung 7 durch eine vorgeschaltete Elektronik (nicht dargestellt) bewegt sich der, als in der Art eines Schieberkolbens gebildete Regelkolben 5 in Blickrichtung auf die Fig. 1 und 2 gesehen nach unten, wobei die den Ringkanal 25 axial nach unten begrenzenden Wandteile 27 außer Überdeckung mit den Wandteilen 29 des Ventilgehäuses 3 gelangen. Druckmittel kann dadurch in den Ringkanal 25 vom Pumpenanschluss P kommend einströmen, wobei der Zustrom unter Einsatz der weiteren Regelkante 31 des Regelkolbens 5 angesteuert wird.

Die unteren Durchgangsöffnungen 64' bleiben hierbei zumindest teilweise in einer geöffneten Position, so dass das Druckmittel durch die Durchgangsöffnungen 64' das Ventilgehäuse 3 wieder verlässt und in den Nutzanschluss A strömen kann. Das Einströmen des Druckmittels in den Nutzanschluss A findet über einen in einem Axialbereich des Nutzanschlusses A gebildeten Ringkanal 75 zwischen dem Ventilblock 61 und der Ventilgehäuseaußenseite statt. Statischer Druck des Druckmittels wird hierbei von dem Nutzanschluss A über die oberen Durchgangsöffnungen 64 in dem Ventilgehäuse 3 an den Regelkolben 5 und über die Dämpfungsdrossel 33 an die Stufe 13 geführt, wodurch eine Gegenkraft F_{G} zu der von der Magnetspuleneinrichtung 7 generierten Magnetkraft F_{M} erzeugt wird. Zusammen mit der von der Druckfeder 41 erzeugten Druckkraft F_{D} stellt sich somit ein regelndes Gleichgewicht der genannten Kräfte ein. Der Regelkolben 5 nimmt insoweit eine gemäß dem herrschenden Kräftegleichgewicht proportionale Regelposition ein.

Mit abnehmendem "statischen" Druck an der Stufe 13 vergrößert sich damit der lichte Querschnitt an dem Pumpenanschluss P durch Aufsteuern der weiteren Regelkante 31 über die Magnetkraft F_{M} und der Volumenstrom des Druckmittels vom Pumpenanschluss P zum Nutzanschluss A nimmt zu. Mit insoweit dann zunehmendem "statischen" Druck an den Durchgangsöffnungen 64 im Bereich des oberen Nutzanschlusses A erhöht sich die Gegenkraft F_{G}, so dass der Regelkolben 5 wiederum in eine zunehmend in Bezug auf den Pumpenanschluss P geschlossene Position gelangt, indem die weitere Regelkante 31 zufährt. Fällt der "statische" Druck an dem Nutzanschluss A durch eine Entlastung des daran angeschlossenen Verbrauchers unter eine Soll-Druckvorgabe, so drückt der Betätigungsstößel 73 unter Wirkung der Magnetkraft F_{M} den Regelkolben 5 wiederum nach unten, und der dargestellte Regelvorgang beginnt erneut. Überflüssige Fluidmengen seitens des Verbrauchers werden mittels Ansteuerung der ersten Regelkante 23 durch den Regelkolben 5 vom Nutz- oder Verbraucheranschluss A kommend an den Tankanschluss T weiter gegeben und insoweit aus dem Regelsystem in einen an das Ventil angeschlossenen Fluidkreis (nicht dargestellt) abgeführt.

Durch die erfindungsgemäße Strömungsführung des Druckmittels von dem Pumpenanschluss P zu dem Nutzanschluss A und vom Nutzanschluss A zum Tankanschluss T ergibt sich eine weitgehend turbulenzfreie und beruhigte Druckmittelströmung an dem Regelkolben 5, und die gewünschte lineare p-Q-Kennlinie lässt sich mittels des erfindungsgemäßen Ventiles erreichen. An den Pumpenanschluss P braucht keine hydraulische Pumpe angeschlossen zu sein, vielmehr genügt hier, jedwede Form einer geeigneten Druckversorgung mit Fluid für das angesprochene erfindungsgemäße Regel ungskonzept.

## Patentansprüche

1. Proportional-Druckregelventil mit einem Ventilgehäuse (3), das mindestens drei fluidführende Anschlüsse aufweist, insbesondere in Form eines Pumpen (P)-, eines Nutz(A)- und eines Tank(T)-Anschlusses, wobei innerhalb des Ventilgehäuses (3) zum wahlweisen Verbinden des Pumpenanschlusses (P) mit dem Nutzanschluss (A) sowie des Nutzanschlusses (A) mit dem Tankanschluss (T) ein Regelkolben (5) längsverfahrbar geführt ist, der über Magnetkraft (F_{M}) mittels einer mit Stromsignalen beaufschlagbaren Magnetspuleneinrichtung (7) ansteuerbar ist, wobei der Regelkolben (5) derart mit einer Flächenübersetzung (9) versehen ist, dass ein am Nutzanschluss (A) sich aufbauender Druck eine Gegenkraft (F_{G}) zur Magnetkraft (F_{M}) der Magnetspuleneinrichtung (7) erzeugt, welche den Regelkolben (5) derart zurückbewegt, dass ein Zufluss von Druckmittel von dem Pumpenanschluss (P) zum Nutzanschluss (A) sich so lange verringert, bis der am Nutzanschluss (A) anstehende Druck der Magnetkraft (F_{M}) und insoweit der Druckwert-Vorgabe über das an der Magnetspuleneinrichtung (7) anstehende jeweilige Stromsignal entspricht, **dadurch gekennzeichnet, dass** die Flächenübersetzung (9) durch einen Durchmesserunterschied (D-d) am Außenumfang (11) des Regelkolbens (5) gebildet ist, der sich, eine Art Stufe (13) am Regelkolben (5) bildend, in jeder Verfahrstellung des Regelkolbens (5) zwischen Nutzanschluss (A) und Tankanschluss (T) erstreckt.

2. Proportional-Druckregelventil nach Anspruch 1, **dadurch gekennzeichnet, dass** der Regelkolben (5) einen Längskanal (15) aufweist mit in ihm angeordneten Durchgangsöffnungen (17, 17'), die zumindest teilweise eine fluidführende Verbindung zwischen dem Längskanal (15) und dem Nutzanschluss (A) sowie dem Tankanschluss (T) herstellen, und dass die dem Nutzanschluss (A) zugeordnete Durchgangsöffnung (17) in Verbindung mit Wandteilen (19) des Regelkolbens (5) und Wandteilen (21) des Ventilgehäuses (3), die zumindest teilweise den Nutzanschluss (A) begrenzen, eine erste Regelkante (23) für die Fluidzu- und -abfuhr am Nutzanschluss (A) ausbilden.

3. Proportional-Druckregelventil nach einem der vorstehenden Ansprüche, **dadurch gekennzeichnet, dass** der Regelkolben (5) zwischen Nutzanschluss (A) und Pumpenanschluss (P) mit einem außenumfangsseitigen Ringkanal (25) versehen ist, dessen begrenzende Wandteile (27) zumindest teilweise mit zuordenbaren Wandteilen (29) des Ventilgehäuses (3), die den Pumpenanschluss(P) begrenzen, eine weitere Regelkante (31) ausbilden.

4. Proportional-Druckregelventil nach einem der vorstehenden Ansprüche, **dadurch gekennzeichnet, dass** die, die Flächenübersetzung (9) bildende Stufe (13) am Regelkolben (5) überwiegend von statischem Druck eines Druckmittels an dem Nutzanschluss (A) beaufschlagt ist.

5. Proportional-Druckregelventil nach einem der vorstehenden Ansprüche, **dadurch gekennzeichnet, dass** die, die Flächenübersetzung (9) bildende Stufe (13) am Regelkolben (5) zumindest teilkreisförmig gebildet ist.

6. Proportional-Druckregelventil nach einem der vorstehenden Ansprüche, **dadurch gekennzeichnet, dass** der Stufe (13) an dem Regelkolben (5) eine Art Dämpfungsdrossel (33) vorgeschaltet ist, die zwischen den Wandteilen (19) des Regelkolbens (5) und den Wandteilen (29) des Ventilgehäuses (3) angeordnet ist.

7. Proportional-Druckregelventil nach einem der vorstehenden Ansprüche, **dadurch gekennzeichnet, dass** die Dämpfungsdrossel (33) durch eine im Querschnitt, asymmetrische, in ihrer radial gerichteten Einstichtiefe (t), in axialer Richtung von dem Nutzanschluss (A) zu dem Tankanschluss (T) betrachtet, sich vergrößernde Umfangsnut (35) in dem Regelkolben (5) gebildet ist, die insoweit mit die Stufe (13) am Regelkolben (5) ausbildet.

8. Proportional-Druckregelventil nach einem der vorstehenden Ansprüche, **dadurch gekennzeichnet, dass** ein Druckmittelstrom von dem Pumpenanschluss (P) zu dem Nutzanschluss (A) an der Außenseite (36) des Regelkolbens (5) zwischen Wandteilen (21) des Ventilgehäuses (3) und Wandteilen (27) des Regelkolbens (5) geführt ist.

9. Proportional-Druckregelventil nach einem der vorstehenden Ansprüche, **dadurch gekennzeichnet, dass** der Regelkolben (5) sich auf seiner der Magnetspuleneinrichtung (7) abgewandten Seite (37) an einem Energiespeicher (39), vorzugsweise in Form einer Druckfeder (41), abstützt.

10. Proportional-Druckregelventil nach einem der vorstehenden Ansprüche, **dadurch gekennzeichnet, dass** der Energiespeicher (39) mit seinem einen freien Ende (43) sich an einem Abschlussteil (45) des Ventilgehäuses (3) abstützt und mit seinem anderen freien Ende (44) am Regelkolben (5).

11. Proportional-Druckregelventil nach einem der vorstehenden Ansprüche, **dadurch gekennzeichnet, dass** der Energiespeicher (39) sich in einem Aufnahmeraum (47) des Ventilgehäuses (3) erstreckt, der über einen Medienkanal (49) fluidführend mit dem Längskanal (15) des Regelkolbens (5) verbunden ist.

12. Proportional-Druckregelventil nach einem der vorstehenden Ansprüche, **dadurch gekennzeichnet, dass** das Ventilgehäuse (3) des Regelkolbens (5) außenumfangsseitig Dichteinrichtungen (51, 51', 51") aufweist zum Separieren der genannten fluidführenden Anschlüsse (P, T, A) zwischen der Außenwand (53) des Ventilgehäuses (3) und der Innenwand (55) eines Ventilblockes (61) in den das Ventilgehäuse (3) einsetzbar ist.

13. Proportional-Druckregelventil nach einem der vorstehenden Ansprüche, **dadurch gekennzeichnet, dass** der Nutzanschluss (A) sowie der Tankanschluss (T) aus mindestens jeweils zwei voneinander verschiedenen Anschlussstellen (64, 64') gebildet sind, die jeweils durch die Wandteile (21) des Ventilgehäuses (3) voneinander separiert sind.

14. Proportional-Druckregelventil nach einem der vorstehenden Ansprüche, **dadurch gekennzeichnet, dass** dieses in der Art einer Einschraubpatrone (59) ausgebildet ist, die in einen Ventilblock (61) einschraubbar ist, der Fluidführungen (63) aufweist, die mit den fluidführenden Anschlüssen (P, T, A) im Ventilgehäuse (3) fluidführend verbunden sind.

15. Proportional-Druckregelventil nach einem der vorstehenden Ansprüche, **dadurch gekennzeichnet, dass** mit dem Proportional-Druckregelventil (1) eine zumindest annähernd lineare p-Q Kennlinie dahingehend generiert ist, dass der Regeldruck unabhängig von dem Druckmittelvolumenstrom zwischen den fluidführenden Anschlüssen (P, T, A) des Proportional-Druckregelventils (1) gehalten ist.

16. Verwendung eines Proportional-Druckregelventils nach einem der vorstehenden Ansprüche zur Steuerung des Druckmittelstromes für einen Arbeitsraum eines hydraulischen Verbrauchers zum Ansteuern einer Kupplungseinrichtung für einen Antrieb einer Maschine oder für einen Fahrantrieb eines Fahrzeugs.

## Claims

1. A proportional pressure-regulating valve having a valve housing (3) which has at least three fluid-conducting connections, in particular in the form of a pump port (P), a utility port (A) and a tank port (T), a regulating piston (5) being guided in a longitudinally displaceable manner within the valve housing (3) in order to selectively connect the pump port (P) to the utility port (A) and to connect the utility port (A) to the tank port (T), said regulating piston being controllable by magnetic force (F_{M}) by means of a magnetic coil device (7) to which current signals can be applied, the regulating piston (5) being provided with a surface transformation (9) so that a pressure which builds up at the utility port (A) generates a counterforce (F_{G}) to the magnetic force (F_{M}) of the magnetic coil device (7) which moves the regulating piston (5) back in such a way that an inflow of pressurising medium from the pump port (P) to the utility port (A) is reduced long enough that the pressure at the utility port (A) corresponds to the magnetic force (F_{M}) and, in this respect, to the pre-set pressure value by means of the respective current signal to the magnetic coil device (7), **characterised in that** the surface transformation (9) is formed by a difference in diameter (D-d) on the outer circumference (11) of the regulating piston (5) which extends between the utility port (A) and the tank port (T), forming a kind of step (13) on the regulating piston (5), in each movement position of the regulating piston (5).

2. The proportional pressure-regulating valve according to Claim 1, **characterised in that** the regulating piston (5) has a longitudinal channel (15) in which passage openings (17, 17') are disposed, which at least partially establish a fluid-conducting connection between the longitudinal channel (15) and the utility port (A) as well as the tank port (T), and **in that** the passage opening (17) assigned to the utility port (A), in conjunction with wall parts (19) of the regulating piston (5) and wall parts (21) of the valve housing (3), which at least partially delimit the utility port (A), form a first control edge (23) for the supply and discharge of fluid to and from the utility port (A).

3. The proportional pressure-regulating valve according to any of the preceding claims, **characterised in that** the regulating piston (5) between the utility port (A) and the pump port (P) is provided with an annular channel (25) on the outer circumference, the delineating wall parts (27) of which at least partially form a further control edge (31) with assignable wall parts (29) of the valve housing (3), said wall parts delimiting the pump port (P).

4. The proportional pressure-regulating valve according to any of the preceding claims, **characterised in that** the step (13) on the regulating piston (5) forming the surface transformation (9) is predominantly acted upon by static pressure of a pressurising medium at the utility part (A).

5. The proportional pressure-regulating valve according to any of the preceding claims, **characterised in that** the step (13) on the regulating piston (5) forming the surface transformation (9) is at least partially circular.

6. The proportional pressure-regulating valve according to any of the preceding claims, **characterised in that** a type of damper throttle (33) is connected upstream of the step (13) on the regulating piston (5), which damper throttle is disposed between the wall parts (19) of the regulating piston (5) and the wall parts of the valve housing (3).

7. The proportional pressure-regulating valve according to any of the preceding claims, **characterised in that** the damper throttle (33) is formed by a widening circumferential groove (35) in the regulating piston (5), said circumferential groove (35) having an asymmetrical cross-section in its radially-directed penetration depth (t) as viewed in the axial direction from the utility port (A) to the tank port (T), and in this respect, helping to form the step (13) on the regulating piston (5).

8. The proportional pressure-regulating valve according to any of the preceding claims, **characterised in that** a flow of pressurising medium is guided from the pump port (P) to the utility port (A) on the outside (36) of the regulating piston (5) between wall parts (21) of the valve housing (3) and wall parts (27) of the regulating piston (5).

9. The proportional pressure-regulating valve according to any of the preceding claims, **characterised in that** the regulating piston (5) is supported on its side (37) that faces away from the magnetic coil device (7) on an energy storage component (39), preferably in the form of a compression spring (41).

10. The proportional pressure-regulating valve according to any of the preceding claims, **characterised in that** one free end (43) of the energy storage component (39) is supported on an end piece (45) of the valve housing (3), and its other free end (44) is supported on the regulating piston (5).

11. The proportional pressure-regulating valve according to any of the preceding claims, **characterised in that** the energy storage component (39) extends into a receiving space (47) of the valve housing (3), said receiving space being connected in a fluid-conducting manner to the longitudinal channel (15) of the regulating piston (5) by means of a media channel (49).

12. The proportional pressure-regulating valve according to any of the preceding claims, **characterised in that** the valve housing (3) of the regulating piston (5) has sealing devices (51, 51', 51") on the outer circumference in order to separate the aforementioned fluid-conducting connections (P, T, A) between the outer wall (53) of the valve housing (3) and the inner wall (55) of a valve block (61) in which the valve housing (3) can be inserted.

13. The proportional pressure-regulating valve according to any of the preceding claims, **characterised in that** the utility port (A) and the tank port (T) are formed of at least two connection points (64, 64') which are each different from one another and which are each separated from one another by the wall parts (21) of the valve housing (3).

14. The proportional pressure-regulating valve according to any of the preceding claims, **characterised in that** this valve is formed in the manner of a screw-on cartridge (59) which can be screwed into a valve block (61), said valve block having fluid guides (63) which are connected to the fluid-conducting connections (P, T, A) in the valve housing (3) in a fluid-conducting manner.

15. The proportional pressure-regulating valve according to any of the preceding claims, **characterised in that** with the proportional pressure-regulating valve (1), an at least approximately linear p-Q characteristic can be generated to the effect that the control pressure is maintained independently of the volumetric flow of pressurising medium between the fluid-conducting connections (P, T, A) of the proportional pressure-regulating valve (1).

16. The use of a proportional pressure-regulating valve according to any of the preceding claims in order to control the flow of pressurising medium to a working chamber of a hydraulic consumer in order to control a coupling device for a drive of a machine, or for a drive system of a vehicle.

## Revendications

1. Vanne de régulation de la pression à effet proportionnel, comprenant un corps (3) de vanne, qui a au moins trois raccords fluidiques, notamment sous la forme d'un raccord (P) de pompe, d'un raccord (A) utile et d'un raccord (T) de réservoir, dans laquelle il est guidé dans le corps (3) de la vanne, pour la liaison au choix du raccord (P) de pompe au raccord (A) utile, ainsi que du raccord (A) utile au raccord (T) de réservoir, un piston (5) de régulation, qui peut se déplacer longitudinalement et qui peut être commandé, par l'intermédiaire d'une force (F_{M}) magnétique, au moyen d'un dispositif (7) à bobine d'électroaimant pouvant être alimenté en signaux de courant, le piston (5) de régulation étant pourvu d'une transformation (9) de surface, de manière à ce qu'une pression, s'établissant dans le raccord (A) utile, produise une force (F_{G}) contraire à la force (F_{M}) magnétique du dispositif (7) à bobine d'électroaimant, qui ramène le piston (5) de réglage, de manière à diminuer une arrivée de fluide sous pression du raccord (P) de pompe au raccord (A) utile jusqu'à ce que la pression régnant au raccord (A) utile corresponde à la force (FM) magnétique et, dans cette mesure, à la prescription de valeur de pression par le signal de courant s'appliquant au dispositif (7) à bobine d'électroaimant, **caractérisée en ce que** la transformation (9) de surface est donnée par une différence (D-d) de diamètre au pourtour (11) extérieur du piston (5) de régulation, qui, en formant une sorte de gradin (13) du piston (5) de régulation, s'étend entre le raccord (A) utile et le raccord (T) de réservoir dans chaque position de déplacement du piston (5) de régulation.

2. Vanne de régulation de la pression à effet proportionnel suivant la revendication 1, **caractérisée en ce que** le piston (5) de régulation a un canal (15) longitudinal, ayant des ouvertures (17, 17') de passage, qui y sont disposées et qui produisent, au moins en partie, une liaison fluidique entre le canal (15) longitudinal et le raccord (A) utile, ainsi que le raccord (T) de réservoir, et **en ce que** les ouvertures (17) de passage associées au raccord (A) utile forment, en liaison avec des parties (19) de paroi du piston (5) de régulation et des parties (21) de paroi du corps (3) de la vanne, qui délimitent au moins en partie le raccord (A) utile, un premier bord (23) de régulation pour l'arrivée de fluide au raccord (A) utile et son évacuation.

3. Vanne de régulation de la pression à effet proportionnel suivant l'une des revendications précédentes, **caractérisée en ce que** le piston (5) de régulation est pourvu, entre le raccord (A) utile et le raccord (P) de pompe, d'un canal (25) annulaire du côté du pourtour extérieur, dont les parties (27) de paroi de délimitation forment, au moins en partie, avec des parties (29) de paroi pouvant leur être associées du corps (3) de la vanne, qui délimitent le raccord (P) de pompe, un autre bord (31) de régulation.

4. Vanne de régulation de la pression à effet proportionnel suivant l'une des revendications précédentes, **caractérisée en ce que** le gradin (13), formant la transformation (9) de surface, du piston (5) de régulation, est soumis, d'une manière prépondérante, à la pression statique d'un fluide sous pression du raccord (A) utile.

5. Vanne de régulation de la pression à effet proportionnel suivant l'une des revendications précédentes, **caractérisée en ce que** le gradin (13), formant la transformation (9) de surface, du .piston (5) de régulation, est, au moins en partie, en forme de partie de cercle.

6. Vanne de régulation de la pression à effet proportionnel suivant l'une des revendications précédentes, **caractérisée en ce qu'**en amont du gradin (13) du piston (5) de régulation, est prévue une sorte d'étranglement (33) d'amortissement, qui est disposée entre les parties (19) de paroi du piston (5) de régulation et les parties (29) de paroi du corps (3) de la vanne.

7. Vanne de régulation de la pression à effet proportionnel suivant l'une des revendications précédentes, **caractérisée en ce que** l'étranglement (33) d'amortissement est formé, dans le piston (5) de régulation, par une rainure (35) périphérique en section transversale dissymétrique s'agrandissant dans sa profondeur (T) de pénétration dirigée radialement, dans la direction axiale considérée du raccord (A) utile au raccord (T) du réservoir, rainure qui, dans cette mesure, est constituée par le gradin (13) du piston (5) de régulation.

8. Vanne de régulation de la pression à effet proportionnel suivant l'une des revendications précédentes, **caractérisée en ce qu'**un courant de fluide sous pression passe du raccord (P) de pompe au raccord (A) utile, du côté (36) extérieur du piston (5) de régulation, entre des parties (21) de paroi du corps (3) de la vanne et des parties (27) de paroi du piston (5) de régulation.

9. Vanne de régulation de la pression à effet proportionnel suivant l'une des revendications précédentes, **caractérisée en ce que** le piston (5) de régulation s'appuie, du côté (37) éloigné de son dispositif (7) à bobine d'électroaimant, sur un accumulateur (39) d'énergie, de préférence sous la forme d'un ressort (41) de compression.

10. Vanne de régulation de la pression à effet proportionnel suivant l'une des revendications précédentes, **caractérisée en ce que** l'accumulateur (39) d'énergie s'appuie, par une extrémité (43) libre, sur une partie (45) de fermeture du corps (3) de la vanne et, par l'autre extrémité (44) libre, sur le piston (5) de régulation.

11. Vanne de régulation de la pression à effet proportionnel suivant l'une des revendications précédentes, **caractérisée en ce que** l'accumulateur (39) d'énergie s'étend dans un espace (47) de réception du corps (3) de la vanne, qui, par un canal (49) pour des fluides, communique fluidiquement avec le canal (15) longitudinal du piston (5) de régulation.

12. Vanne de régulation de la pression à effet proportionnel suivant l'une des revendications précédentes, **caractérisée en ce que** le corps (3) de la soupape du piston (5) de régulation a, du côté du pourtour extérieur, des dispositifs (51, 51', 51") d'étanchéité pour séparer les raccords (P, T, A) fluidiques mentionnés entre la paroi (53) extérieure du corps (3) de la vanne et la paroi (55) intérieure d'un bloc (61) de vanne, dans lequel le corps (3) de vanne peut être inséré.

13. Vanne de régulation de la pression à effet proportionnel suivant l'une des revendications précédentes, **caractérisée en ce que** le raccord (A) utile ainsi que le raccord (T) du réservoir sont formés d'au moins deux points (64, 64') de raccordement différents l'un de l'autre, qui sont séparés l'un de l'autre, respectivement par les parties (21) de paroi du corps (3) de la soupape.

14. Vanne de régulation de la pression à effet proportionnel suivant l'une des revendications précédentes, **caractérisée en ce qu'**elle est constituée sous la forme d'une cartouche (59) à visser, qui peut se visser dans un bloc (61) de vanne, ayant des conduits (63) pour du fluide, qui communique fluidiquement avec les raccords (P, T, A) fluidiques du corps (3) de la vanne.

15. Vanne de régulation de la pression à effet proportionnel suivant l'une des revendications précédentes, **caractérisée en ce que**, par la vanne (1) de régulation de la pression à effet proportionnel, peut être créée une courbe caractéristique p-Q, au moins à peu près linéaire, de sorte à maintenir la pression de régulation indépendamment du courant en volume du fluide sous pression entre les raccords (P, T, A) fluidiques de la vanne (1) de régulation de la pression à effet proportionnel.

16. Utilisation d'une vanne de régulation de la pression à effet proportionnel suivant l'une des revendications précédentes, pour régler le courant de fluide sous pression, pour une chambre de travail d'un consommateur hydraulique, afin de commander à un dispositif d'accouplement pour un entraînement d'une machine ou pour une propulsion d'un véhicule.
